# EUROPEAN PATENT APPLICATION

(11) **EP 4 826 311 A1**
(43) Date of publication of application: **21.10.2026**
(21) Application number: 24904189.8
(22) Date of filing: 06.12.2024
(51) Int. Cl.: F25B 23/00, F28F 13/18, B32B 7/023, B32B 7/12, B32B 27/08, B32B 27/36, B32B 17/10, C09J 129/14, C09J 123/08, C09J 175/04

(54) **RADIANT COOLING GLAZING UNIT FOR MOBILITY DEVICE AND MOBILITY DEVICE INCLUDING SAME**

(30) Priority: 11.12.2023 KR 20230179087
(71) Applicant: Hyundai Motor Company, Seoul 06797 (KR); Kia Corporation, Seoul 06797 (KR); Seoul National University R&DB Foundation, Seoul 08826 (KR)
(72) Inventor: LEE, Min Jae, Hwaseong-si, Gyeonggi-do 18280 (KR); KIM, Won Sik, Hwaseong-si, Gyeonggi-do 18280 (KR); KIM, Tae Han, Hwaseong-si, Gyeonggi-do 18280 (KR); LEE, Hyung Jun, Hwaseong-si, Gyeonggi-do 18280 (KR); SONG, Jae Hyun, Hwaseong-si, Gyeonggi-do 18280 (KR); LEE, Byung Hong, Hwaseong-si, Gyeonggi-do 18280 (KR); PARK, Jae Han, Hwaseong-si, Gyeonggi-do 18280 (KR); KANG, In Seok, Hwaseong-si, Gyeonggi-do 18280 (KR); KO, Seung Hwan, Seoul 06557 (KR)
(74) Representative: Viering, Jentschura & Partner mbB Patent- und Rechtsanwälte
(86) International application number: PCT/KR2024/019959
(87) International publication number: WO 2025/127624

(57) **Abstract**

The present invention relates to a radiant cooling glazing unit for a mobility device, comprising: a first transparent base layer; a first light reflective layer formed on the first transparent base layer and having a reflectance of 80% or more with respect to light having a wavelength of 780 nm to 1,300 nm and a transmittance of 70% or more with respect to visible light having a wavelength of 400 nm to 780 nm; a second light reflective layer formed on the first reflective layer and in which a first metal protection layer, a metal layer, and a second metal protection layer are sequentially laminated; and a second transparent base layer formed on the second light reflective layer.

## Description

### TECHNICAL FIELD

The present disclosure relates to a radiative cooling glazing unit for a mobility that has excellent reflectance for light in UV-ray and near-infrared-ray regions and has excellent long-wavelength infrared-ray radiation, resulting in an excellent radiative cooling effect, and a mobility including the same.

### [Cross-Reference to Related Applications]

This application claims the benefit of Korean Patent Application No. 10-2023-0179087, filed on December 11, 2023, which application is hereby incorporated herein by reference.

### BACKGROUND

In general, energy consumption is essential for cooling. For example, a general-purpose cooling apparatus, such as a refrigerator and an air conditioner, uses energy to compress refrigerant and then performs the cooling using absorption of heat generated when the compressed refrigerant expands. Unlike the general-purpose cooling apparatus, radiative cooling is a technology that may perform the cooling without wasting the energy. To improve a radiative cooling efficiency, it is important to well control the absorption, reflection, and radiation of light in each wavelength band. Most heat is generated from incident sunlight. The sunlight is divided into ultraviolet (UV) light, visible light, and infrared light. When reflecting light in each wavelength band, inflow of the heat via the sunlight may be blocked. For example, an internal temperature of a black vehicle that absorbs light well during a sunny day increases easily, but an internal temperature of a white vehicle that reflects light well rather than absorbs the same increases relatively slowly.

A variety of materials, such as a polymer, a multi-layer thin film made of an inorganic material or a ceramic material, a component for the radiative cooling including a metal reflective layer, and a paint containing a white pigment, are used as a material for the radiative cooling. The polymer material generally has a high absorptivity (an emissivity) for the infrared light, but it is easily deteriorated by the ultraviolet light, moisture, and the like when left outdoors because of a nature thereof and thus has a short lifespan. In the case of the multi-layer thin film, the number of layers must be increased to increase the emissivity for the infrared light, which increases an absorptivity of the sunlight, making it difficult to achieve a high-efficiency radiative cooling performance. In addition, the material including the metal reflective layer is difficult to be applied in real life because of low long-term stability caused by oxidation of metal and a unit cost issue. Because such metal material performs regular reflection, eye fatigue and light blur are caused. The paint containing the white pigment is generally not composed of a material with a high extinction coefficient, and thus it has an insufficient radiative cooling ability because of insufficient infrared emissivity and ultraviolet reflectance.

As an alternative to this problem, Korean Patent Application Publication No. 2019-0072514 (Patent Document 1) discloses an infrared-ray shielding sheet including a stack film, in which high refractive index resin layers containing fine particles and low refractive index resin layers containing fine particles are alternately stacked on top of each other, and an infrared-ray absorbing dye layer having a visible light transmittance of at least 70%. However, the sheet of Patent Document 1 has poor cooling performance and has limitations in color rendering.

Therefore, there is a need for research and development on a material that has excellent reflectance for light in the UV-ray and near-infrared-ray regions and has excellent long-wavelength infrared-ray radiation and thus has excellent radiative cooling ability.

### DETAILED DESCRIPTION OF THE INVENTION

### TECHNICAL PROBLEM

An aspect of the present disclosure provides a material which has excellent reflectance for light in UV-ray and near-infrared-ray regions, has excellent long-wavelength infrared-ray radiation, and thus has excellent radiative cooling ability, and has excellent durability, and thus is applicable as an outdoor material which is exposed to sunlight for a long time, and a mobility including them.

### TECHNICAL SOLUTION

According to an embodiment of the present disclosure, a radiative cooling glazing unit for a mobility includes: a first transparent base layer;
a first light reflecting layer formed on the first transparent base layer and having a reflectance of 80% or greater for light with a wavelength of 780 to 1,300 nm, and a transmittance of 70% or greater for visible light with a wavelength of 400 to 780 nm;
a second light reflecting layer formed on the first light reflecting layer, and including a stack of a first metal protective layer, a metal layer, and a second metal protective layer sequentially stacked on the first light reflecting layer; and
a second transparent base layer formed on the second light reflecting layer.

Moreover, embodiments of the present disclosure provide a mobility including the glazing unit.

### ADVANTAGEOUS EFFECTS

According to embodiments of the present disclosure, the radiative cooling glazing unit for the mobility according to embodiments of the present disclosure has excellent reflectance for light in the UV-ray and near-infrared-ray regions and has excellent long-wavelength infrared-ray radiation, resulting in an excellent radiative cooling effect. Moreover, the glazing unit has excellent durability and abrasion resistance against sunlight, making it very suitable as an outdoor radiative cooling material exposed to sunlight for a long time, such as the material of the exterior of the mobility.

### BRIEF DESCRIPTION OF THE DRAWINGS

FIGS. 1 and 2 are cross-sectional views of a radiative cooling glazing unit for a mobility according to an embodiment of the present disclosure; and
FIG. 3 shows a durability evaluation result evaluated in an example embodiment of the present disclosure.

### BEST MODE FOR CARRYING OUT THE INVENTION

Herein, when one component "includes" a certain component, this means that the one component may further include other components rather than excluding other components, unless specifically stated otherwise.

Herein, when one member is described to be located on a "surface", "top", "one surface", "other surface", or "both surfaces" of another member, this refers not only to a case in which the one member is in contact with said another member, but also to a case in which a third member exists between the two members.

In addition, herein, "a weight average molecular weight" may be measured by a method well known in the art, and it may represent, for example, a value measured by a gel permeation chromatograph (GPC) method.

### Radiative cooling glazing unit for mobility

The radiative cooling glazing unit for a mobility according to embodiments of the present disclosure includes a first transparent base layer; a first light reflecting layer formed on the first transparent base layer; a second light reflecting layer formed on the first light reflecting layer; and a second transparent base layer formed on the second light reflecting layer.

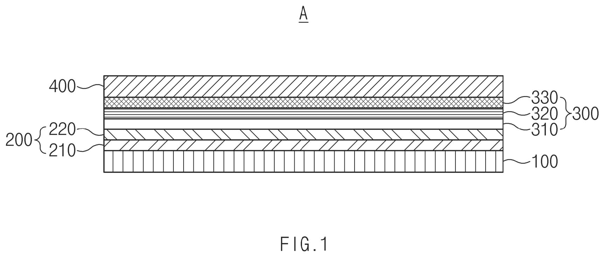

Referring to FIG. 1, the radiative cooling glazing unit A for the mobility according to embodiments of the present disclosure may include a structure in which the first transparent base layer 100; the first light reflecting layer200; the second light reflecting layer300; and the second transparent base layer 400 are stacked in this order. In this regard, the second light reflecting layer 300 may include a stack in which a first metal protective layer 310, a metal layer 320, and a second metal protective layer 330 are stacked in this order. Moreover, the first light reflecting layer 200 may include a structure in which first layers 210 and second layers 220 are alternately stacked on top of each other.

### First transparent base layer and second transparent base layer

Each of the first transparent base layer and the second transparent base layer independently serves to absorb heat of long-wavelength infrared-rays generated inside the mobility to which the glazing unit is applied. In this regard, the long-wavelength infrared-ray may have a wide wavelength region of 2 to 25 µm.

Moreover, a material of each of the first transparent base layer and the second transparent base layer may be independently used without any particular restrictions as long as the material is a transparent material that may be applied for a building or a mobility. For example, each of the first transparent base layer and the second transparent base layer may include at least one selected from the group consisting of glass and polycarbonate-based resin. In this regard, the glass may be used without particular restrictions as long as it is commonly purchased and/or available, such as soda lime glass.

Each of the first transparent base layer and the second transparent base layer may independently have an appropriate thickness depending on a purpose of use thereof. For example, each of the first transparent base layer and the second transparent base layer may independently have an average thickness of 1.0 to 5.0 mm, or 1.0 to 2.6 mm. When the average thickness of each of the first transparent base layer and the second transparent base layer is smaller than the above range, there is a problem that the manufactured glazing unit is damaged by external impact and/or the long-wavelength infrared-ray absorption is reduced. When the thickness exceeds the above range, a weight of the manufactured glazing unit becomes greater, such that fuel efficiency of the mobility including the same may be lowered.

### First light reflecting layer

The first light reflecting layer serves to block heat by reflecting near-infrared light with a wavelength in a range from 780 to 1,300nm.

Specifically, the first light reflecting layer has a reflectance equal to or higher than 80% for near-infrared rays with the wavelength in the range from 780 to 1,300nm, and a transmittance equal to or higher than 70% for visible light with a wavelength in a range from 400 to 780nm. Specifically, the first light reflecting layer may have a high reflectance in a range from 80 to 90% for the light with the wavelength in the range from 780 to 1,300nm, and a transmittance equal to or higher than 75% or in a range from 80 to 95% for the visible light with the wavelength in the range from 400 to 780nm. Accordingly, the first light reflecting layer has an effect of improving a radiative cooling ability by reflecting the near-infrared light irradiated to the glazing unit.

In addition, the first light reflecting layer is preferably a polymer-containing layer rather than a metal-containing structure considering economic efficiency. Specifically, the first light reflecting layer may include a form in which the first layers containing a first polymer and the second layers containing a second polymer having a lower refractive index than that of the first layers are alternately stacked on top of each other. When the first light reflecting layer includes the form in which the first layers and the second layers with the lower refractive index than that of the first layers are alternately stacked on top of each other, the first layer with a relatively high refractive index and the second layer with a relatively low refractive index are stacked alternately on top of each other to create interference therebetween and change a travel direction of light, thereby effectively blocking the heat.

Further, the first layer may have a refractive index equal to or higher than 1.4, in a range from 1.6 to 2.2, or in a range from 1.8 to 2.0. When the refractive index of the first layer is within the above range, the first layer and the second layer may create the interference therebetween and change the travel direction of light, thereby improving the radiative cooling ability of the glazing unit.

The second layer may have a refractive index equal to or higher than 1.3, equal to or higher than 1.5 and lower than 2.1, or equal to or higher than 1.7 and lower than 1.9. When the refractive index of the second layer is within the above range, the first layer and the second layer create the interference therebetween and change the travel direction of light, thereby improving the radiative cooling ability of the glazing unit.

The first light reflecting layer may have an average thickness in a range from 50 to 300µm, from 60 to 270µm, or from 75 to 250µm. When the average thickness of the first light reflecting layer is smaller than the above range, hardness of the manufactured glazing unit may be insufficient or a decrease in near-infrared ray reflectance may occur. When the average thickness exceeds the above range, an increase in reflectance at an unwanted wavelength of the manufactured glazing unit, a decrease in visible light transmittance, and low economic feasibility caused by less obtainable effects compared to thickness may occur.

### Second light reflecting layer

The second light reflecting layer serves to block the heat by reflecting the near-infrared light with a wavelength in a range from 1,300 to 2,500nm and to improve durability of the glazing unit against sunlight.

The second light reflecting layer is formed on the first light reflecting layer, and includes the form in which the first metal protective layer, the metal layer, and the second metal protective layer are sequentially stacked on the first light reflecting layer. The second light reflecting layer includes the form in which the first metal protective layer, the metal layer, and the second metal protective layer are sequentially stacked on the first light reflecting layer, and improves reflectance for infrared light with a wavelength equal to or higher than 1,300nm, thereby improving a radiative cooling performance of the manufactured glazing unit.

Each of the first metal protective layer and the second metal protective layer may independently contain at least one selected from a group consisting of indium-doped tin oxide (ITO, In-doped tin oxide), aluminum-doped zinc oxide (AZO, Al-doped Zn oxide), fluorine-doped tin oxide (FTO, Fluorine-doped tin oxide), titanium dioxide (TiO₂), neodymium oxide (Nd₂O₃), and silicon dioxide (SiO₂). When each of the first metal protective layer and the second metal protective layer contains the metal oxide as described above, a problem that the metal layer is exposed to air and oxidized is prevented, and the visible light transmittance of the glazing unit is adjusted.

In addition, each of the first metal protective layer and the second metal protective layer may independently have an average thickness in a range from 15 to 200nm, from 50 to 150nm, or from 30 to 100nm. When the average thickness of each of the first metal protective layer and the second metal protective layer is smaller than the above range, metal in the metal layer may be eluted by an external impact to reduce the durability of the manufactured glazing unit, or the metal layer may react with air and be easily oxidized to reduce durability of the metal layer, and the visible light transmittance may be reduced. When the average thickness exceeds the above range, the visible light transmittance of the manufactured glazing unit may be reduced or the near-infrared ray reflectance may be excessively increased.

For example, the metal layer may contain at least one selected from a group consisting of silver (Ag), aluminum (Al), gold (Au), aluminum oxide (Al₂O₃), chromium (Cr), and copper (Cu). When the metal layer contains at least one of the metals described above, the near-infrared ray reflectance of the glazing unit increases because of light interference.

Additionally, the metal layer may have an average thickness in a range from 1 to 100nm, from 1 to 50nm, from 1 to 30nm, or from 1 to 20nm. When the average thickness of the metal layer is smaller than the above range, the near-infrared ray reflectance of the manufactured glazing unit may be insufficient. When the average thickness exceeds the above range, the economic feasibility may be low because of the less obtainable effects compared to the thickness.

The second light reflecting layer may have an average thickness in a range from 30 to 300nm, from 50 to 200nm, or from 50 to 150nm. When the average thickness of the second light reflecting layer is smaller than the above range, the near-infrared ray reflectance and the visible light transmittance of the manufactured glazing unit may be insufficient. When the average thickness exceeds the above range, the economic feasibility may be low because of less obtainable effects compared to the thickness of the second light reflecting layer.

For example, the glazing unit may include a structure in which the first transparent base layer, a first adhesive layer, the first light reflecting layer, the second light reflecting layer, a second adhesive layer, and the second transparent base layer are stacked in this order.

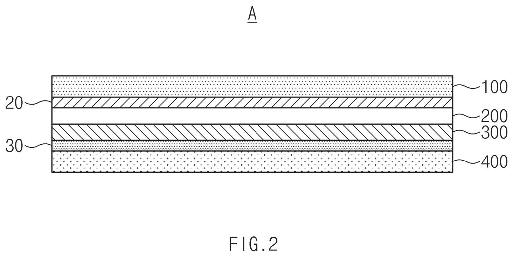

Referring to FIG. 2, the glazing unit A according to embodiments of the present disclosure may include a structure in which the first transparent base layer 100, a first adhesive layer 20, the first light reflecting layer 200, the second light reflecting layer 300, a second adhesive layer 30 and the second transparent base layer 400 are stacked in this order.

In this regard, in the glazing unit A, the first transparent base layer 100 may be an inner glass, and the second transparent base layer 400 may be an outer glass. That is, the first transparent base layer 100 of the glazing unit A may contact the mobility. Thus, the radiative cooling effect may be further improved by the glazing unit absorbing the heat inside the mobility under the first light reflecting layer, and releasing the same to the outside.

### First adhesive layer and second adhesive layer

The first adhesive layer serves to bond the first transparent base layer and the first light reflecting layer to each other, and the second adhesive layer serves to bond the second light reflecting layer and the second transparent base layer to each other.

Each of the first adhesive layer and the second adhesive layer may independently include one or more selected from the group consisting of polyvinyl butyral (PVB)-based adhesives, ethylene-vinyl acetate (EVA)-based adhesives, and polyurethane (TPU)-based adhesives.

Moreover, each of the first adhesive layer and the second adhesive layer may independently have an average thickness of 0.2 to 1.5 mm, 0.2 to 1.0 mm, 0.3 to 0.8 mm, or 0.4 to 0.8 mm. When the average thickness of the first adhesive layer and/or the second adhesive layer is smaller than the above range, problems may arise such as peeling thereof due to insufficient adhesion between the transparent base layer and the light reflecting layer, or the adhesive layer being easily destroyed due to its thin thickness during a bonding process, thereby making it difficult to handle the same, and thus increasing a process time, or the adhering product becoming vulnerable to external shock. Moreover, when the average thickness of the first adhesive layer and/or the second adhesive layer exceeds the above range, a hardness of the adhesive layer is high, such that an additional process should be introduced in the bonding process to lower the hardness, or the large thickness of the adhesive layer increases the weight of the manufactured glazing unit, which may lead to increased fuel efficiency of the mobility, which may lead to a problem of poor economic feasibility.

Specifically, the first adhesive layer may have an average thickness of 0.2 to 1.0 mm or 0.3 to 0.8 mm, and the second adhesive layer may have an average thickness of 0.3 to 1.5 mm or 0.4 to 0.8 mm. When the average thickness of each of the first adhesive layer and the second adhesive layer is within the above range, the light reflecting layer and transparent base layer may be effectively bonded to each other via the adhesive layer with the thinnest thickness, and the economic efficiency of the manufactured glazing unit may be improved.

### Dye coating layer

Moreover, the glazing unit may additionally include a dye coating layer on one surface of each of the first transparent base layer and the second transparent base layer. Specifically, the glazing unit may include a structure in which a first dye coating layer, the first transparent base layer, the first light reflecting layer, the second light reflecting layer, the second transparent base layer, and a second dye coating layer are stacked in this order.

For example, the first dye coating layer may be formed on an opposite surface to a surface of the first transparent base layer which is in contact with the first adhesive layer, and the second dye coating layer may be formed on an opposite surface to a surface of the second transparent base layer in contact with the second adhesive layer. Specifically, the glazing unit may include a structure in which the first dye coating layer, the first transparent base layer, the first adhesive layer, the first light reflecting layer, the second light reflecting layer, the second adhesive layer, the second transparent base layer, and the second dye coating layer are stacked in this order.

Moreover, the dye coating layer may include a dye that may generally be applied to glass without particular restriction. For example, the dye may include an organic and/or inorganic dye such as black and green dye.

The glazing unit may have a reflectance of 70% or greater for light with a wavelength of 800 to 1,000 nm. Specifically, the glazing unit may have a reflectance of 75% or greater or 80% or greater for light with a wavelength of 800 to 1,000 nm.

Moreover, the glazing unit may have an emissivity of 70% or greater for light with a wavelength of 5 to 20 µm. Specifically, the glazing unit may have an emissivity of 80% or greater or 90% or greater for light with a wavelength of 5 to 20 µm.

The glazing unit may have an average thickness of 2.5 to 20 mm, 2.5 to 10 mm, or 2.5 to 7 mm. When the average thickness of the glazing unit is within the above range, the glazing unit has excellent cooling performance. Moreover, the glazing unit may be manufactured using a roll-to-roll process to manufacture the same so as to have the average thickness within the above range.

Moreover, the glazing unit may be applied as a material for the exterior of the mobility or the building. In this regard, the mobility may include, for example, cars, aircraft, trains, ships, or various mobile robots. Moreover, the building may be movable or fixed.

As described above, the radiative cooling glazing unit for the mobility according to embodiments of the present disclosure has excellent reflectance for light in the UV-ray and near-infrared-ray regions and has excellent long-wavelength infrared-ray radiation, resulting in an excellent radiative cooling effect. Moreover, the glazing unit has excellent durability and abrasion resistance against sunlight, making it very suitable as an outdoor radiative cooling material exposed to sunlight for a long time, such as the material of the exterior of the mobility.

### Mobility

The mobility of embodiments of the present disclosure includes the glazing unit. Thus, the mobility has excellent energy efficiency by enabling savings in cooling energy during summer or when exposed to strong sunlight.

In this regard, the mobility may include, for example, cars, aircraft, trains, ships, or various mobile robots.

Specifically, the mobility may include a windshield or a sunroof including the glazing unit.

### MODE FOR CARRYING OUT THE INVENTION

Hereinafter, embodiments of the present disclosure are described in more detail through examples. However, these examples are only intended to help understand embodiments of the present disclosure, and the scope of the present disclosure is not limited to these examples in any way.

### Manufacturing Example 1. Manufacturing of laminate-1

As the first light reflecting layer, a first light reflecting layer with an average thickness of 75µm (transmittance for visible light (wavelength 400-780nm): 88% and reflectance for near-infrared light (wavelength 780-1300nm): 80%) (manufacturer: Toray Film, product name: PICASUS, high refractive index layer and low refractive index layer alternately stacked, each layer made of polymer) was used.

The first metal protective layer was formed on the first light reflecting layer to have an average thickness of 0.065µm (65nm) via a deposition method using an indium-doped tin oxide (ITO) target under an argon atmosphere, the metal layer was formed on the first metal protective layer to have an average thickness of 0.01µm (10nm) via a metal deposition method using an Ag planar target under the argon atmosphere, and the second metal protective layer was formed on the metal layer to have an average thickness of 0.065µm (65nm) using an ITO in the same manner as the formation of the first metal protective layer to manufacture a laminate-1.

### Test Example 1: Durability evaluation

The durability of the laminate-1 of Manufacturing Example 1 was evaluated in a following manner.

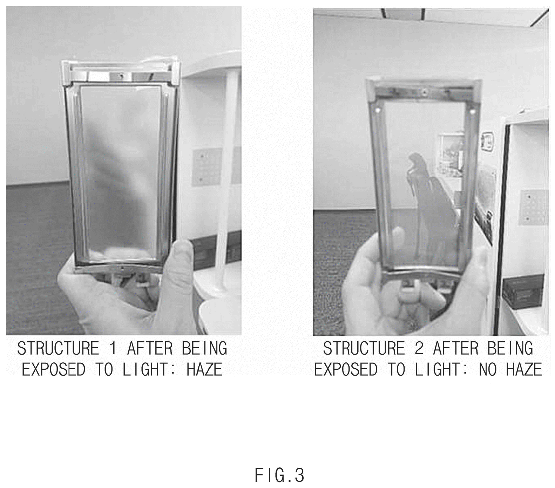

Specifically, light was irradiated onto the first light reflecting layer or the second light reflecting layer of the laminate-1 of Manufacturing Example 1 for 3 weeks so that a light exposure amount thereto was 185mJ using ATLAS Ci5000 (Xenon Weather ometer) equipment. Then, an appearance of the laminate was observed with the naked eye. In this regard, a case where the light was irradiated on the first light reflecting layer was designated as a structure 1, and a case where light was irradiated on the second light reflecting layer was designated as a structure 2. The durability evaluation results are shown in FIG. 3.

As shown in FIG. 3, in the structure 1 where light was irradiated on the first light reflecting layer, the first light reflecting layer was degraded by light such that haze occurred. On the other hand, the structure 2 in which light was irradiated on the second light reflecting layer had excellent durability against light. Accordingly, it was found that the structure 2 in which the second light reflecting layer was exposed to the outside was more suitable as a structure of the radiative cooling material.

### Present Example 1. Manufacturing of glazing unit-1

A polyvinyl butyral (PVB)-based adhesive film (manufacturing company: Sekisui, product name: PVB film, average thickness: 0.76 mm) was applied to each of the first light reflecting layer and the second metal protective layer of the laminate-1 of Manufacturing Example 1 to form each of the first adhesive layer and the second adhesive layer. Afterwards, the transparent glasses (thickness 2.1mm, the first transparent base layer and the second transparent base layer) were stacked on the first and second adhesive layers, respectively. Thus, the glazing unit-1 was manufactured.

### Present Examples 2 to 5 and Comparative Examples 1 to 4.

The glazing unit was manufactured in the same manner as in Present Example 1, except that a thickness and a composition of each of the layers were adjusted as shown in Table 1.

**[Table 1]**

| | Color and thickness of first transparent base layer | Thickness of first adhesive layer (mm) | Thickness of first light reflecting layer (µm) | Thickness of each layer in second light reflecting layer (µm) | | | Thicknes s of second adhesive layer (mm) | Color and thickness of second transparent base layer |
|---|---|---|---|---|---|---|---|---|
| | | | | First metal protective layer | Metal layer | Second metal protective layer | | |
| Present Ex. 1 | Transparent, 2.1mm | 0.76 | 75 | 0.065 | 0.01 | 0.065 | 0.76 | Transparent, 2.1mm |
| Present Ex. 2 | Transparent, 2.1mm | 0.76 | 75 | 0.065 | 0.01 | 0.065 | 0.76 | Transparent, 2.1mm |
| Present Ex. 3 | Transparent, 2.1mm | 0.72 | 75 | 0.065 | 0.01 | 0.065 | 0.72 | Transparent, 2.1mm |
| Present Ex. 4 | Transparent, 2.1mm | 0.38 | 75 | 0.065 | 0.01 | 0.065 | 0.38 | Transparent, 2.1mm |
| Present Ex. 5 | Transparent, 2.1mm | 0.76 | 75 | 0.065 | 0.01 | 0.065 | 0.76 | Green, 2.1mm |
| Com-para-tive Ex. 1 | Transparent, 2.1mm | 0.76 | - | 0.065 | 0.01 | 0.065 | 0.76 | Transparent, 2.1mm |
| Com-para-tive Ex. 2 | Transparent, 2.1mm | 0.76 | 75 | - | - | - | 0.76 | Transparent, 2.1mm |
| Com-para-tive Ex. 3 | Transparent, 2.1mm | 0.76 | 75 | 0.065 | - | - | 0.76 | Transparent, 2.1mm |
| Com-para-tive Ex. 4 | Transparent, 2.1mm | 0.76 | 75 | - | 0.01 | - | 0.76 | Transparent, 2.1mm |

### Test Example 2: Characteristic evaluation

The physical properties of the glazing units of the present examples and the comparative examples were evaluated in a following manner. The results are shown in Table 2.

Specifically, an integrating sphere was mounted on a UV-ray-visible light spectrophotometer (UV-VIS spectrophotometer) and a Fourier Transform Infrared-ray (FT-IR) spectrometer, and then, the reflectance, emissivity, and transmittance of the laminate in the Manufacturing Example at the wavelength of 0.2 to 20 µm were measured, and an average emissivity, average reflectance, and average transmittance were calculated.

**[Table 2]**

| | Average reflectance (%) at wavelength of 0.8 to 2.5 µm | Average emissivity (%) at wavelength of 4 to 20 µm | Average transmittance (%) at wavelength of 0.4 to 0.8 µm |
|---|---|---|---|
| Present Example 1 | 80 | 90 | 80 |
| Present Example 2 | 75 | 90 | 80 |
| Present Example 3 | 83 | 90 | 73 |
| Present Example 4 | 80 | 90 | 80 |
| Present Example 5 | 80 | 90 | 50 |
| Comparative Example 1 | 50 | 90 | 90 |
| Comparative Example 2 | 50 | 90 | 90 |
| Comparative Example 3 | 60 | 90 | 80 |
| Comparative Example 4 | 70 | 90 | 70 |

As shown in Table 2, it was found that the glazing unit of each of Present Examples 1 to 5 had a high reflectance of 75% or greater for UV-rays and near-infrared-rays with a wavelength of 0.8 to 2.5 µm, and the high emissivity of over 90% for infrared-rays with a wavelength of 4 to 20 µm and thus had excellent radiative cooling ability. Moreover, it was found that the glazing unit of each of Present Examples 1 to 5 had a high transmittance of over 80% for visible light with a wavelength of 400 to 780 nm and did not cause distortion of the field of view.

On the other hand, all of Comparative Example 1 excluding the first light reflecting layer, Comparative Example 2, excluding the second light reflecting layer, Comparative Example 3 including only the first metal protective layer (ITO layer) instead of the second light reflecting layer, and Comparative Example 4 which includes only the metal layer (Ag layer) instead of the second light reflecting layer had reflectance of 70% or lower for UV-rays and near-infrared-rays with a wavelength of 0.8 to 2.5 µm and thus had poor radiative cooling ability.

## Claims

1. A radiative cooling glazing unit for a mobility comprising:
a first transparent base layer;
a first light reflecting layer on the first transparent base layer and having a reflectance of 80% or greater for light with a wavelength of 780 to 1,300 nm and a transmittance of 70% or greater for visible light with a wavelength of 400 to 780 nm;
a second light reflecting layer on the first light reflecting layer and comprising a stack of a first metal protective layer, a metal layer, and a second metal protective layer sequentially stacked on the first light reflecting layer; and
a second transparent base layer on the second light reflecting layer.

2. The radiative cooling glazing unit for the mobility of claim 1, wherein each of the first transparent base layer and the second transparent base layer independently comprises at least one selected from the group consisting of glass and polycarbonate-based resin.

3. The radiative cooling glazing unit for the mobility of claim 1, wherein the first light reflecting layer comprises first layers containing a first polymer and second layers containing a second polymer and having a lower refractive index than a refractive index of the first layers, wherein the first layers and the second layers are alternately stacked on top of each other.

4. The radiative cooling glazing unit for the mobility of claim 1, wherein:
the first light reflecting layer has an average thickness of 50 to 300 µm; and
the second light reflecting layer has an average thickness of 30 to 300 nm.

5. The radiative cooling glazing unit for the mobility of claim 1, wherein:
each of the first metal protective layer and the second metal protective layer independently has an average thickness of 15 to 200 nm; and
the metal layer has an average thickness of 1 to 100 nm.

6. The radiative cooling glazing unit for the mobility of claim 1, wherein each of the first metal protective layer and the second metal protective layer independently comprises at least one selected from the group consisting of indium-doped tin oxide (ITO), aluminum-doped zinc oxide (AZO), fluorine-doped tin oxide (FTO), titanium dioxide (TiO₂), neodymium oxide (Nd₂O₃), and silicon dioxide (SiO₂).

7. The radiative cooling glazing unit for the mobility of claim 1, wherein the metal layer comprises at least one selected from the group consisting of silver (Ag), aluminum (Al), gold (Au), aluminum oxide (Al₂O₃), chromium (Cr), and copper (Cu).

8. The radiative cooling glazing unit for the mobility of claim 1, wherein the radiative cooling glazing unit has a reflectance of 70% or greater for light with a wavelength of 800 to 1,000 nm and an emissivity of 70% or greater for light with a wavelength of 5 to 20 µm.

9. The radiative cooling glazing unit for the mobility of claim 1, wherein the radiative cooling glazing unit has a structure in which a first dye coating layer, the first transparent base layer, the first light reflecting layer, the second light reflecting layer, the second transparent base layer, and a second dye coating layer are stacked in this order.

10. The radiative cooling glazing unit for the mobility of claim 1, wherein the radiative cooling glazing unit has a structure in which the first transparent base layer, a first adhesive layer, the first light reflecting layer, the second light reflecting layer, a second adhesive layer, and the second transparent base layer are stacked in this order.

11. The radiative cooling glazing unit for the mobility of claim 10, wherein each of the first adhesive layer and the second adhesive layer independently comprises at least one selected from the group consisting of polyvinyl butyral (PVB)-based adhesive, ethylene-vinyl acetate (EVA)-based adhesive, and polyurethane (TPU)-based adhesive.

12. A mobility comprising the glazing unit of one of claims 1 to 11.

13. The mobility of claim 12, comprising a windshield or a sunroof including the glazing unit.
